# EUROPÄISCHE PATENTANMELDUNG

(11) **EP 2 246 651 A2**
(43) Veröffentlichungstag der Anmeldung: **03.11.2010**
(21) Anmeldenummer: 10160534.3
(22) Anmeldetag: 21.04.2010
(51) Int. Cl.: F25B 15/00, C09K 5/04

(54) **Absorptionswärmepumpen, Absorptionskältemaschinen und Absorptionswärmetransformatoren auf Basis EMIM-acetat / Methanol**

(30) Priorität: 27.04.2009 EP 09158859
(71) Anmelder: BASF SE, 67056 Ludwigshafen (DE)
(72) Erfinder: Gerhard, Dirk, 91052, Erlangen (DE); Szarvas, Laszlo, 67071, Ludwigshafen (DE); Oehlenschläger, Steffen, 67056, Ludwigshafen (DE); Alemany, Aurelie, 50678, Köln (DE)

(57) **Zusammenfassung**

Absorptionswärmepumpen, Absorptionskältemaschinen und Absorptions-wärmetransformatoren (kurz Vorrichtungen genannt), **dadurch gekennzeichnet, dass** sie mit
A) Methanol als Kältemittel und
B) einer Zusammensetzung, welche die ionische Flüssigkeit 1-Ethyl-3-Methyl-imidazolium -acetat (kurz EMIM-acetat) enthält, als Absorptionsmittel
betrieben werden.

## Beschreibung

Die vorliegende Erfindung betrifft Absorptionswärmepumpen, Absorptionskältemaschinen und Absorptionswärmetransformatoren (kurz Vorrichtungen genannt), welche mit
A) Methanol als Kältemittel und
B) einer Zusammensetzung, welche die ionische Flüssigkeit 1-Ethyl-3-Methyl-imidazolium -acetat (kurz EMIM-acetat) enthält, als Absorptionsmittel

### betrieben werden.

Wärmepumpen sind Vorrichtungen, bei denen unter Zufuhr von Wärme und/oder technischer Arbeit Wärme von einem niedrigen zu einem höheren Temperaturniveau gepumpt wird. Die auf dem hohen Temperaturniveau anfallende Verflüssigungswärme wird z. B. zum Heizen genutzt. Bei einer Kältemaschine wird dagegen die Abkühlung eines Kältemittels beim Entspannen und Verdampfen genutzt, um ein Kältemittel im externen Kühlkreislauf weiter abzukühlen. Wärmepumpen sind nicht nur beschränkt auf die Erzeugung von Wärme und Kälte sondern ermöglichen auch die Umwandlung der zugeführten Wärme in Arbeit, elektrischer oder mechanischer Energie, wie ORC (organic rankine cycle oder Kalina-Prozess).

Konventionelle Wärmepumpen und Kältemaschinen beruhen auf den Effekten, welche bei der mechanischen Verdichtung, bzw. Verflüssigung und der Entspannung, bzw. Verdampfung von Gasen, bzw. Flüssigkeiten in einem thermodynamischen Kreisprozess auftreten.

Bei Absorptionswärmepumpen, Absorptionskältemaschinen und Absorptionswärmetransformatoren werden ebenfalls thermodynamische Kreisprozesse zum Transport von Wärme, bzw. zur Abkühlung, ausgenutzt. Sie werden jedoch mit einem Arbeitsmittelpaar aus einem Kältemittel und einem Absorptionsmittel unter Ausnutzung der temperaturabhängigen Löslichkeit des Kältemittels im Absorptionsmittel betrieben.

Als Arbeitsstoffpaar bekannt ist insbesondere Ammoniak (Kältemittel) und Ammoniak/Wasser (Absorptionsmittel); ein anderes bekanntes Arbeitsstoffpaar besteht aus Wasser (Kältemittel) und Wasser/Lithiumbromid (Absorptionsmittel).

Aus WO 2006/084262, WO 2005/113702, WO 2006/124015 und WO 2006/124776 sind Arbeitsstoffpaare mit ionischen Flüssigkeiten, insbesondere auch Imidazoliumsalzen, als Absorptionsmittel bekannt, als zugehörige Kältemittel werden z.B. Wasser, Ammoniak, Halogenkohlenwasserstoffe, Argon, Kohlendioxid, Methanol, Sauerstoff und Stickstoff genannt. Das konkrete Arbeitsstoffpaar EMIM-acetat/ Methanol ist dem Stand der Technik jedoch nicht zu entnehmen.

An geeignete Arbeitsstoffpaare für Absorptionswärmepumpen, Absorptionskältemaschinen und Absorptionswärmetransformatoren werden insbesondere folgende Anforderungen gestellt:
- sie sollen nicht toxisch und nicht explosiv sein
- das Kältemittel soll eine hohe Verdampfungsenthalpie haben
- hohe Löslichkeit des Kältemittels im Absorptionsmittel, möglichst keine Kristallisation
- deutliche Dampfdruckerniedrigung des Kältemittels beim Lösen im Absorptionsmittel
- möglichst geringer Dampfdruck des Absorptionsmittels
- möglichst gute Mischbarkeit des Kältemittels und des Absorptionsmittels
- gute Wärmeleitfähigkeit des Kältemittels und des Absorptionsmittels
- niedrige Viskosität des Absorptionsmittels und der Mischung aus dem Kältemittel und dem Absorptionsmittel
- weder das Kältemittel noch das Absorptionsmittel sollten korrosiv sein
- eine möglichst geringe Mischungswärme um einen hohen Wirkungsgrad zu erreichen.

Darüber hinaus sollten die im Kreisprozess auftretenden oder notwendigen Drucke möglichst nahe am Atmosphärendruck sein, so dass ein möglichst kleines Produkt aus Apparatevolumen und Überdruck erreicht wird. Damit wird eine kostengünstige apparative Ausgestaltung des Prozesses ermöglicht.

Die bisher gefundenen Arbeitsstoffpaare mit ionischen Flüssigkeiten haben gegenüber konventionellen Systemen grundsätzliche Vorteile, z.B. haben ionische Flüssigkeiten generell einen geringen Dampfdruck. Es besteht jedoch weiterhin der grundsätzliche Wunsch nach verbesserten Arbeitsstoffpaaren, welche die Kombination aller obigen Anforderungen in möglichst hohem Ausmaß erfüllen.

Aufgabe der vorliegenden Erfindung war es daher Arbeitsstoffpaare zu finden, die sich möglichst gut zur Verwendung in Absorptionswärmepumpen, Absorptionskältemaschinen und/oder Absorptionswärmetransformatoren eignen.

Demgemäß wurden die oben definierten Absorptionswärmepumpen, Absorptionskältemaschinen und Absorptionswärmetransformatoren (zusammenfassend auch kurz Vorrichtungen genannt) gefunden.

### Die Vorrichtungen werden mit

A) Methanol als Kältemittel und
B) einer Zusammensetzung, welche die ionische Flüssigkeit 1-Ethyl-3-Methyl-imidazolium -acetat (kurz EMIM-acetat) enthält, als Absorptionsmittel betrieben. Das Kältemittel und Absorptionsmittel werden zusammenfassend auch als Arbeitsstoffpaar bezeichnet.
   Das Absorptionsmittel B) enthält als wesentlichen Bestandteil die ionische Flüssigkeit EMIM-acetat. Bei EMIM-acetat handelt es sich um eine Verbindung der Formel 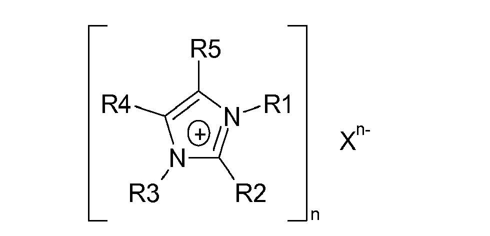 worin
   R1 für eine Ethylgruppe,
   R3 für eine Methylgruppe,
   R2, R4, und R5 für ein H-Atom,
   n für 1 und
   X für die Acetatgruppe (H₃C-COO-) steht.

EMIM-acetat ist eine ionische Flüssigkeit mit einem Schmelzpunkt kleiner-20°C bei 1 bar und einer Viskosität von 93 mPa*s bei 20°C, 1 bar.

Die Zusammensetzung B) kann neben der ionischen Flüssigkeit weitere Bestandteile enthalten, in Betracht kommen z. B. sonstige Additive, wie Korrosionsschutzmittel, oder Mischungskomponenten.

Insbesondere kann EMIM-acetat im Gemisch mit weiteren ionischen Flüssigkeiten oder anderen Absorptionsmitteln verwendet werden. Als weitere ionische Flüssigkeiten kommen insbesondere solche in Betracht, die die Viskosität des Gemisches weiter absenken oder das Absorptionsvermögen erhöhen, so dass größere Mengen des Kältemittels im Gemisch absorbiert werden können.

Weiterhin kann die Zusammensetzung B) naturgemäß auch Verunreinigungen enthalten wie Wasser oder sonstige Verbindungen, die z. B. bei der Herstellung der ionischen Flüssigkeit oder durch Recyclingprozesse eingebracht werden können. Es kann sich dabei z.B. um Alkohole, Amine, Wasser oder Salze handeln. Salze, welche als Verunreinigungen enthalten sind oder gezielt zugesetzt werden, können korrosionsschützend wirken.

In einer bevorzugten Ausführungsform besteht die als Absorptionsmittel verwendete Zusammensetzung B) zu mehr als 50 Gew.-%, insbesondere zu mehr als 80 Gew.-%, besonders bevorzugt zu mehr als 90 Gew.-% und ganz besonders bevorzugt zu mehr als 95 Gew.-% aus EMIM-acetat.

Die Zusammensetzung B) ist vorzugsweise in einem Temperaturbereich von -20 bis 200°C, bevorzugt von 0 bis 180°C und besonders bevorzugt von 20 bis 150°C flüssig (bei 1 bar, Normaldruck).

Methanol und die Zusammensetzung B) sind im gesamten Temperaturbereich von -20 bis 200°C, insbesondere von -5 bis 150°C, miteinander mischbar.

Neben dem Kältemittel Methanol können weitere Kältemittel im Gemisch mit Methanol verwendet werden. In einer bevorzugten Ausführungsform handelt es sich bei mehr als 50 Gew.-%, insbesondere bei mehr als 80 Gew.-%, besonders bevorzugt bei mehr als 95 Gew.-% des verwendeten Kältemittels um Methanol. Ganz besonderes bevorzugt wird im Rahmen dieser Erfindung ausschließlich Methanol als Kältemittel eingesetzt.

Beim Betrieb der erfindungsgemäßen Vorrichtungen kommt es zu wiederholten Absorptionsprozesse und Desorptionsprozessen, so dass in den Vorrichtungen dann Gemische des Kältemittels und Absorptionsmittels vorliegen.

Die Absorptionswärmepumpen, Absorptionskältemaschinen und Wärmetransformatoren enthalten üblicherweise einen Verflüssiger, ein Expansionselement, einen Kocher und einen Absorber und werden mit dem Arbeitsstoffpaar betrieben. Das Methanol wird in dem ausgeführten Kreisprozess in dem Absorptionsmittel absorbiert und wieder desorbiert (verdampft).

Bei den Vorrichtungen handelt es sich insbesondere um Kühlsysteme oder Speichersysteme. Als Kühlsysteme seien exemplarisch z.B. Kühlschränke, (Tief)kühltruhen, Kühltheken oder Vorrichtungen zur Raumkühlung, wie Klimaanlagen zur Klimatisierung von Gebäuden und/oder Räumen, Vorrichtungen für Kühlräume oder gekühlte Lagerräume genannt. Als Speichersysteme seien z.B. Kältespeicher, Eisspeicher oder Kaltwasserspeicher genannt. Im Allgemeinen handelt es sich um ortsfeste Vorrichtungen.

Vorteilhafterweise können die Vorrichtungen klein und einfach konstruiert werden. Zum Betreiben der Vorrichtungen können beliebige Wärmequellen genutzt werden, so kann z.B. solare Wärme oder die Abwärme einer Kraftmaschine genutzt wird.

Methanol und EMIM-acetat sind bei 20°C, 1 bar flüssig und in beliebigen Verhältnissen mischbar (siehe Kristallisationsgrenzen in Tabelle 1).

Die gute Wechselwirkung zwischen Methanol und EMIM-acetat bewirkt eine hohe Dampfdruckerniedrigung. Tabelle 2 zeigt die hohe Dampfdruckerniedrigung des Arbeitsstoffpaars Methanol/EMIM-acetat im Vergleich zu anderen Arbeitstoffpaaren im Gewichtsbereich von bis zu 40 Gew.-% Methanol. Anwendungstechnisch bedeutsam ist hier die Dampfdruckerniedrigung bei 10 bis 25 Gew.-% Methanol, insbesondere von 15 bis 25 Gew.-% Methanol.

Nur beim Arbeitsstoffpaar Methanol/ bis(Tributyl-methylammonium)-sulfat (TBMASO4) wird bei 10 bis 25 Gew.-% Methanol eine annähernd gleich gute Dampfdruckerniedrigung erreicht.

Die Vorrichtungen haben vorteilhafte Betriebspunkte. Der Betriebspunkt des Absorbers sollte bei möglichst hohen Temperaturen und tiefen Drucken liegen, während der Desorber einen Betriebspunkt bei möglichst tiefen Temperaturen haben sollte.

Da der Absorber bei konstanten Temperaturen betrieben werden muss und durch die Absorption des Kältemittels die Absorptionswärme frei wird, muss dieser gekühlt werden. Eine hohe Absorbertemperatur ermöglicht die Verwendung von wärmeren Kühlmedien (Bsp: Flusswasser) oder im günstigsten Fall sogar eine Luftkühlung. Dies steigert den Wirkungsgrad der Maschine und senkt die Komplexität der gesamten Anlage, da im günstigsten Fall auf eine Gegenkühlung des Kühlmediums verzichtet werden kann. Der Druck im Absorber wird durch den Druck im Verdampfer und somit durch die erzeugte Kühltemperatur bestimmt.
Je geringer diese ist, desto höher ist der erreichbare Wirkungsgrad der Absorptionskälteanlage. Im günstigsten Fall erfolgt die Desorbtion durch Zuführung von Abwärme, Geothermie oder Solarthermie.

Ausgehend von den Dampfdruckkurven des Kältemittels bei zwei oder drei verschiedenen Temperaturen kann ein sogenanntes Duhring-Chart erstellt werden. Dieses stellt die Gleichgewichtskonzentration im Verdampfer, Absorber, Desorber und Kondensator in einem Druck = f (-1/Temperatur) Diagramm dar. Wichtige Betriebsparameter wie maximale Absorbertemperatur und Konzentrationsunterschiede des Kältemittels im Absorptionsmedium im Absorber/Desorber (=Entgasungsbreite) können so aus dem Diagramm abgelesen werden (siehe auch: Absorption chillers and heat pumps, K. E. Herold, 1996, CRC Press (Boca Raton, FL).

In Tabelle 3 sind so berechnete Betriebspunkte (Temperaturen) des Absorbers und Desorbers für verschiedene Arbeitstoffpaare aufgelistet. Für das Arbeitsststoffpaar Methanol/EMIM acetat ergibt sich bei hoher Betriebstemperatur des Absorbers im Vergleich die geringste Betriebstemperatur des Desorbers.

Weiterhin sind die Viskositäten der Gemische aus Methanol und EMIM-acetat gering, so dass ein guter Stoff- und Wärmetransport gegeben ist und so ein hoher Wirkungsgrad möglich wird (siehe Tabelle 4).

Das erfindungsgemäße Arbeitsstoffpaar ist materialverträglich und führt nicht oder kaum zu Korrosionen an teilen der Vorrichtung oder zu einer Zersetzung von Dichtungsringen aus Kunststoff.

Weiterhin ist das erfindungsgemäße Arbeitsstoffpaar thermisch bis 140°C stabil.

**Tabelle 1:**

| Kristallisationsgrenzen ausgewählter ILs in Methanol. | |
|---|---|
| lonische Flüssigkeit (IL) | Kristallisationsgrenze Gew-% IL im Gemisch IL/Methanol ab der Kristallisation eintritt |
| EMIM acetat | 100 |
| Bis-(Ethyl-methyl-morpholinium) sulfat | 75 |
| TMA OAc | 55 |
| 1,1,3,3-Tetramethyl-N,N-dibutylguanidinium acetat | 100 |
| Dimethylmorpholinium actetat | 65 |
| Tributylmethylammonium sulfate | 90 |

EMIM acetat ist flüssig und mit Methanol in beliebigem Verhältnis mischbar, eine Kristallisationsgrenze gibt es nicht.

**Tabelle 2:**

| Dampfdrucke bei T= 40°C für verschiedene Gemische Methanol/ ionische Flüssigkeit mit steigendem Gewichtsanteil Methanol | | |
|---|---|---|
| | Gew.-% MeOH | p /mbar |
| 1-Ethyl-3-methylimidazolium actetat (EMIM acetat) | 0 | 0 |
| | 7,1 | 9,0 |
| | 13,2 | 17,0 |
| | 22,9 | 39,0 |
| | 32,2 | 77,0 |
| | 41,3 | 130,0 |
| | | |
| Bis-(Ethyl-methyl-morpholin) sulfat | 0 | 0 |
| | 25 | 84 |
| | 29 | 114 |
| | 33 | 148 |
| | 39 | 206 |
| | | |
| 1,1,3,3-Tetramethyl-N,N-dibutylguanidinium acetat | 0,0 | 0 |
| | 14,9 | 58 |
| | 27,6 | 154 |
| | 44,2 | 298 |
| | | |
| Bis-(Tributyl-methyl-ammonium) sulfat (TBMASO4) | 0,0 | 0 |
| | 11,1 | 10 |
| | 18,4 | 36 |
| | 25,9 | 57 |
| | 31,0 | 92 |
| | 36,5 | 127 |
| | 41,2 | 158 |
| | | |
| Tetramethylammonium acetat | 0,0 | 0 |
| | 11,1 | 35 |
| | 20,0 | 36 |
| | 27,3 | 41 |
| | 33,3 | 62 |
| | 38,5 | 86 |

| | Gew.-% MeOH | p /mbar |
|---|---|---|
| 1-Ethyl-3-methylimidazolium dicyanamid | 0,0 | 0 |
| | 11,4 | 86 |
| | 20,4 | 148 |
| | 27,8 | 185 |
| | 33,9 | 213 |
| | 39,1 | 223 |
| | | |
| Dimethylimidazolium acetat (MMIM acetat) | 0,0 | 0 |
| | 11,6 | 125 |
| | 20,8 | 193 |
| | 28,3 | 224 |
| | 34,5 | 249 |
| | 39,7 | 259 |
| | | |
| 1-Ethyl-3-methylimidazolium methansulfonat | 0,0 | 0 |
| | 11,4 | 72 |
| | 20,4 | 130 |
| | 27,8 | 178 |
| | 33,9 | 214 |
| | 39,1 | 238 |
| | | |
| 1-Ethyl-3-methylimidazolium diethylphosphat | 0 | 0 |
| | 30 | 167,6 |

**Tabelle 3:**

| | |
|---|---|
| Betriebspunkte für verschiedene Kaltwassertemperaturen und Gewichtsprozente Methanol im Absorber und Desorber Alle Gewichtsangaben sind auf das Gemisch Methanol/ionische Flüssigkeit bezogen | |
| Kältemittel | Methanol |
| Kaltwassertemperatur | 5°C |

| | | Gew.% Methanol im | | Gew.-% Methanol im |
|---|---|---|---|---|
| Absorptionsmittel | T_{absorber} /°C | Absorber | T_{Desorber} /°C | Desorber |
| EMIM OAc | 49 | 20 | 122 | 15 |
| MMIM OAc | 54 | 20 | 132 | 15 |
| bis(Tributylmethylammonium) sulfat | 37 | 25 | 154 | 20 |
| Kältemittel | Methanol | | | |
| Kaltwassertemperatur | 0°C | | | |

| | | Gew.% Methanol im | | Gew.-% Methanol im |
|---|---|---|---|---|
| Absorptionsmittel | T_{absorber} /°C | Absober | T_{Desorber} /°C | Desorber |
| EMIM OAc | 44 | 20 | 112 | 15 |
| | | | | |
| Kältemittel | Methanol | | | |
| Kaltwassertemperatur | 15°C | | | |

| | | Gew.% Methanol im | | Gew.-% Methanol im |
|---|---|---|---|---|
| Absorptionsmittel | T_{absorber} /°C | Absober | T_{Desorber} /°C | Desorber |
| EMIM OAc | 60 | 20 | 138 | 15 |
| | | | | |
| Kältemittel | Methanol | | | |
| Kaltwassertemperatur | -5°C | | | |

| | | Gew.% Methanol im | | Gew.-% Methanol im |
|---|---|---|---|---|
| Absorptionsmittel | T_{absorber} /°C | Absober | T_{Desorber} /°C | Desorber |
| EMIM OAc | 36 | 20 | 102 | 15 |

**Tabelle 4:**

| Viskositäten bei 20°C in Abhängigkeit des Alkoholgehalts. | | | | | |
|---|---|---|---|---|---|
| Viskosität bei 20°C /mPa s | | | | | |
| IL | rein | 15% MeOH | 20% MeOH | 15% EtOH | 20% EtOH |
| EMIM OAc | 93 | 13 | 9 | 34 | 18 |
| EMIM (MeO)₂PO₂ | 394 | 25 | 16 | 79 | 30 |

## Patentansprüche

1. Absorptionswärmepumpen, Absorptionskältemaschinen und Absorptions-wärmetransformatoren (kurz Vorrichtungen genannt), **dadurch gekennzeichnet, dass** sie mit
A) Methanol als Kältemittel und
B) einer Zusammensetzung, welche die ionische Flüssigkeit 1-Ethyl-3-Methylimidazolium -acetat (kurz EMIM-acetat) enthält, als Absorptionsmittel betrieben werden.

2. Vorrichtungen gemäß Anspruch 1 oder 2, **dadurch gekennzeichnet, dass** die Zusammensetzung B) zu mehr als 90 Gew. % aus der ionischen Flüssigkeit 1-Ethyl-3-Methylimidazolium-acetat besteht

3. Absorptionswärmepumpen, Absorptionskältemaschinen und Absorptionswärmetransformatoren, enthaltend einen Verflüssiger, ein Expansionselement, einen Kocher, einen Absorber und
A) Methanol als Kältemittel und
B) eine Zusammensetzung, welche die ionische Flüssigkeit 1-Ethyl-3-Methylimidazolium-acetat enthält, als Absorptionsmittel

4. Absorptionswärmepumpe gemäß einem der Ansprüche 1 bis 3, **dadurch gekennzeichnet, dass** die Absorption des Kältemittels A) in der Zusammensetzung B) erfolgt.

5. Absorptionskältemaschine gemäß einem der Ansprüche 1 bis 3, **dadurch gekennzeichnet, dass** die Absorption des Kältemittels A) in der Zusammensetzung B) erfolgt

6. Absorptionswärmetransformator gemäß einem der Ansprüche 1 bis 3, **dadurch gekennzeichnet, dass** die Absorption des Kältemittels A) in einer Zusammensetzung B) erfolgt.

7. Absorptionskältemaschine gemäß einem der Ansprüche 1 bis 3, **dadurch gekennzeichnet**, das zum Betreiben der Vorrichtung solare Wärme oder die Abwärme einer Kraftmaschine genutzt wird.
